# EUROPÄISCHE PATENTANMELDUNG

(11) **EP 2 068 028 A2**
(43) Veröffentlichungstag der Anmeldung: **10.06.2009**
(21) Anmeldenummer: 08169946.4
(22) Anmeldetag: 26.11.2008
(51) Int. Cl.: F16D 13/64

(54) **Kopplungsanordnung**

(30) Priorität: 05.12.2007 DE 102007058515
(71) Anmelder: ZF Friedrichshafen AG, 88038 Friedrichshafen (DE)
(72) Erfinder: Abu Snima, Khalid, Dr., 97520 Röthlein (DE); Groß, Matthias, 97447 Gerolzhofen (DE)

(57) **Zusammenfassung**

Eine Kopplungsanordnung zur wahlweisen Drehkopplung einer Eingangswelle (16), insbesondere eines Kompressors (12) in einem Fahrzeug, mit einem Antriebsorgan, insbesondere Antriebsrad, umfasst einen mit dem Antriebsorgan zur gemeinsamen Drehung um eine Drehachse (A) gekoppelten oder zu koppelnden ersten Reibelemententräger (18), mit welchem die Reibelemente (22) einer ersten Gruppe (24) von Reibelementen drehfest gekoppelt sind, einen mit der Eingangswelle (16) zur gemeinsamen Drehung um die Drehachse (A) gekoppelten oder zu koppelnden zweiten Reibelemententräger (40), mit welchem die Reibelemente (42) einer zweiten Gruppe (46) von Reibelementen drehfest gekoppelt sind, wobei der erste Reibelemententräger (18) an seinem Außenumfangsbereich (76) wenigstens einen diesen axial überbrückenden Strömungskanal (80) aufweist.

## Beschreibung

Die vorliegende Erfindung betrifft eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsorgan zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind.

Die in Fahrzeugen eingesetzten Kompressoren sind allgemein als Kolbenmaschinen ausgebildet, weisen also zumindest einen sich periodisch hin und her bewegenden Kolben auf, der bei Bewegung in einer Richtung Luft in einem Zylinder komprimiert. Bei der Zurückbewegung des Kolbens muss dieser die an seiner Rückseite vorhandene Luft verdängen. Diese Luft kann im Allgemeinen durch den die Kurbelwelle bzw. Eingangswelle des Kompressors enthaltenden Gehäusebereich und über die Kopplungsanordnung entweichen. Es entsteht ein so genannter Blow-By-Effekt. Da im Allgemeinen das Bestreben vorhanden ist, den vorhandenen Bauraum so effektiv als möglich zu nutzen und Zwischenräume so klein als möglich zu gestalten, besteht insbesondere in dem die Kopplungsanordnung umgebenden Bereich des Kompressorgehäuses ein nur sehr kleiner spaltartiger Zwischenraum, durch welchen die vom Kompressorkolben bei dessen Zurückbewegung verdrängte Luft entweichen muss.

Es ist die Aufgabe der vorliegenden Erfindung, eine Kopplungsanordnung zur wahlweisen Drehkopplung einer Eingangswelle, insbesondere eines Kompressors in einem Fahrzeug, mit einem Antriebsorgan vorzusehen, bei welcher die Entstehung eines Staudrucks so weit als möglich unterdrückt werden kann.

Erfindungsgemäß wird diese Aufgabe gelöst durch eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsorgan zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, wobei der erste Reibelemententräger an seinem Außenumfangsbereich wenigstens einen diesen axial überbrückenden Strömungskanal aufweist.

Bei der erfindungsgemäßen Ausgestaltung ist also im Bereich des Außenlamellenträgers selbst durch das Bereitstellen von wenigstens einem Strömungskanal ein vergrößerter Strömungsquerschnitt für die von einem Kolben verdrängte Luft bereitgestellt.

Der wenigstens eine Strömungskanal kann bei einer baulich sehr einfach zu realisierenden Ausgestaltungsform durch eine nach radial außen offene Einsenkung gebildet sein. Dies kann in konstruktiver Weise bei nicht zusätzlich erforderlichem radialem Bauraum des Außenlamellenträgers dadurch realisiert werden, dass der erste Reibelemententräger mit einer Innenverzahnung zur Drehkopplung mit den Reibelementen der ersten Gruppe von Reibelementen ausgebildet ist und dass im Umfangsbereich von wenigstens einem der Zähne ein Strömungskanal vorgesehen ist. Vorzugsweise ist bei jedem Zahn ein Strömungskanal vorgesehen, wobei dann, wenn diese Strömungskanäle durch Einsenkungen bereitgestellt sind, der Außenlamellenträger allgemein mit ondulierter Struktur zur Bereitstellung der Einsenkungen und der Zähne der Innenverzahnung ausgebildet sein kann.

Da im Allgemeinen die Zähne eines Außenlamellenträgers, mit welchem dieser in Drehkopplungseingriff mit den ihm zugeordneten Reibelementen steht, sich axial erstrecken, ist es vorteilhaft, wenn auch der wenigstens eine Strömungskanal sich axial erstreckt.

Gemäß einem besonders vorteilhaften Aspekt kann weiter vorgesehen sein, dass an einer Außenumfangsfläche eine zur Drehachse schräggestellte Rippen- oder/und Rillenstruktur vorgesehen ist. Diese Strukturierung an der Außenoberfläche sorgt zusätzlich zum vergrößerten Strömungsquerschnitt für einen Fördereffekt, da die Seitenflächen bzw. Seitenflanken der Rillen bzw. Rippen im Rotationsbetrieb nach Art von Förderschaufeln wirksam werden.

Um den Schmierfluiddurchtritt zu ermöglichen, wird vorgeschlagen, dass zwischen wenigstens zwei Strömungskanälen eine den ersten Reibelemententräger radial durchsetzende Öffnung vorgesehen ist. Alternativ oder zusätzlich ist es möglich, dass wenigstens ein Strömungskanal durch eine Einsenkung bereitgestellt ist und dass im Bereich des Bodens der Einsenkung eine den ersten Reibelemententräger radial durchsetzende Öffnung vorgesehen ist.

In besonders einfacher Art und Weise kann der Außenlamellenträger insbesondere dann, wenn eine ondulierte Strukturierung gewünscht ist, durch Umformung eines Blechrohlings gebildet werden.

Die Erfindung betrifft ferner eine Kombination eines Kompressors in einem Fahrzeug mit einer erfindungsgemäß aufgebauten Kupplungsanordnung, wobei der Kompressor ein den Außenlamellenträger radial außen wenigstens bereichsweise übergreifendes Gehäuse aufweist.

Die vorliegende Erfindung wird nachfolgend mit Bezug auf die beiliegenden Figuren detailliert beschrieben. Es zeigt:
- Fig. 1: eine Längsschnittansicht einer erfindungsgemäßen Kopplungsanordnung in Verbindung mit einem Kompressor für ein Fahrzeug;
- Fig. 2: eine Axialansicht eines Außenlamellenträgers der Kopplungsanordnung der Fig. 1;
- Fig. 3: eine Schnittansicht des in Fig. 2 gezeigten Außenlamellenträgers, geschnitten längs einer Linie III-III in Fig. 2;
- Fig. 4: eine perspektivische Ansicht des Außenlamellenträgers.

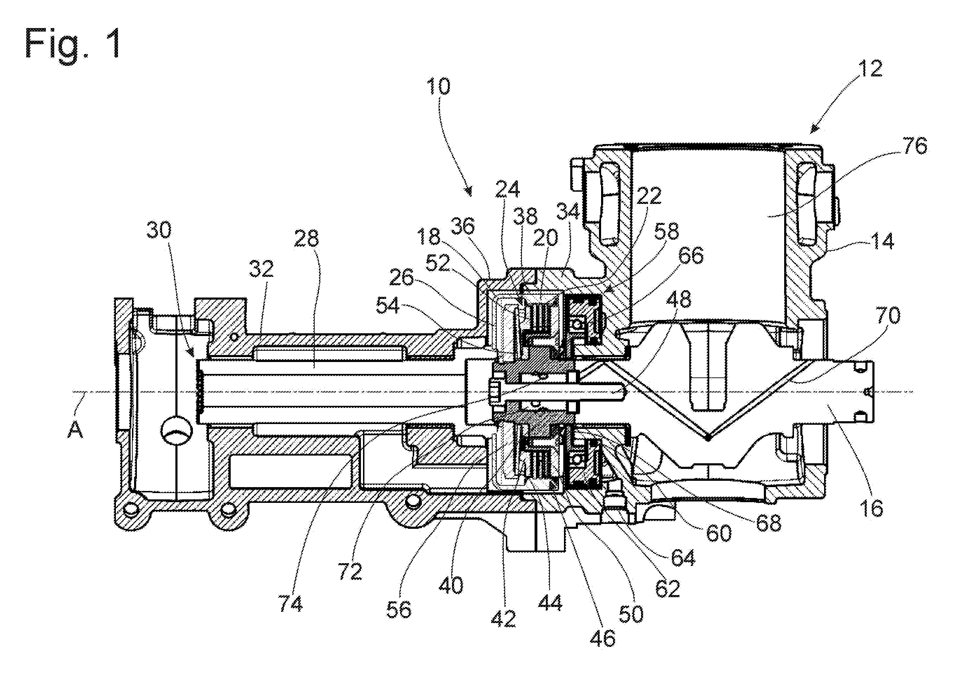

In der Fig. 1 ist die Kombination einer Kopplungsanordnung 10, hier aufgebaut nach Art einer Lamellenkupplung, mit einem nur teilweise dargestellten Kompressor 12 zur Erzeugung von Druckluft in einem Fahrzeug dargestellt. Der Kompressor 12 umfasst ein Gehäuse 14, in welchem eine als Kurbelwelle ausgebildete Eingangswelle 16 in ihren beiden Endbereichen drehbar gelagert ist. Über ein nicht dargestelltes Pleuel treibt die Eingangswelle 16 einen bzw. ggf. mehrere Kompressorkolben zur Erzeugung von Druckluft an.

Die Kopplungsanordnung 10 umfasst allgemein einen ersten Reibelemententräger 18, der topfartig ausgebildet ist und im Bereich einer Innenverzahnung 20 mit einer Mehrzahl von ersten Reibelementen 22 in Drehkopplungseingriff steht. Diese ersten Reibelemente 22 bilden eine erste Gruppe 24 von Reibelementen, die auch als antriebsseitige Reibelemente zu betrachten sind. In einem Bodenbereich 26 ist der erste Reibelemententräger 18 drehfest mit einer Übertragungshohlwelle 28. An ihrem vom ersten Reibelemententräger 18 entfernten Ende weist die Übertragungshohlwelle 28 eine Axialverzahnungsformation 30 auf, welche in Drehkopplungseingriff mit einer entsprechenden Formation an einem Antriebsrad gebracht werden kann. Dieses Antriebsrad kann beispielsweise als Zahnrad ausgebildet sein und durch ein Antriebsaggregat zur Drehung angetrieben werden. Die Übertragungshohlwelle 28 ist in einem Gehäuse 32 beispielsweise über Gleitlager oder dergleichen drehbar getragen.

In ihren aneinander angrenzenden und beispielsweise auch miteinander verbundenen Bereichen umschließen die beiden Gehäuse 14 und 32 mit jeweiligen Gehäuseabschnitten 34, 36 die Kopplungsanordnung 10, so dass zwischen dem Außenumfang des ersten Reibelemententrägers 18 und den beiden Gehäusen 14, 32 ein spaltartiger Zwischenraum 38 gebildet ist.

Ein zweiter Reibelemententräger 40 weist an seinem Außenumfangsbereich eine Außenverzahnung 42 auf, mit der eine Mehrzahl von zweiten Reibelementen 44 in Kämmeingriff steht. Diese zweiten Reibelemente 44 bilden allgemein eine zweite Gruppe 46 von Reibelementen, welche als abtriebsseitige Reibelemente zu betrachten sind. Der zweite Reibelemententräger 40 und die Eingangswelle 16 weisen an ihren einander zugewandt positionierten Endbereichen ebenfalls Axialverzahnungsformationen auf, die durch axiales Aneinanderheranführen in Drehkopplungseingriff gebracht werden können. Ein Schraubbolzen 48, welcher den zweiten Reibelemententräger 40 axial durchsetzt, ist in die Eingangswelle 16 eingeschraubt, um die beiden Verzahnungsformationen in Kämmeingriff zu halten. Man erkennt, dass der Schraubbolzen 48 durch die Übertragungshohlwelle 28 hindurch manipulierbar ist, so dass auf diese Art und Weise die mit der Kopplungsanordnung 10 verbundene Übertragungshohlwelle 28 und dem Gehäuse 32 an den Kompressor 12 herangeführt und durch Einschrauben des Schraubbolzens 48 dann ein fester Verbund mit der Eingangswelle 16 erzeugt werden kann.

An der dem Kompressor 12 zugewandten axialen Seite trägt der zweite Reibelemententräger 40 eine Widerlagerplatte 50, beispielsweise durch Verschraubung. An der anderen, also vom Kompressor 12 abgewandten axialen Seite liegt eine Anpressplatte 52, die unter der Einwirkung eines als Tellerfeder oder Membranfeder ausgebildeten Kraftspeichers 54 axial bewegbar ist, um auf diese Art und Weise im Einrückzustand die Reibelemente 22, 44 gegeneinander zu pressen. Axial ist der Kraftspeicher 54 an einer mit dem zweiten Reibelemententräger 40 zumindest axial gekoppelten Abstützplatte 56 abgestützt.

Um die Kopplungsanordnung 10 einzurücken bzw. auszurücken, ist eine Betätigungsanordnung 58 vorgesehen. Diese umfasst im Gehäuse 14 des Kompressors 12 einen ringartigen Zylinder 60, in welchem ein Ringkolben 62 axial verlagerbar ist. Über einen Fluidzuführanschluss 64 kann Druckfluid, also beispielsweise Luft oder Flüssigkeit in den Zylinder 60 eingeleitet werden, um auf diese Art und Weise den Kolben 62 axial zu verschieben, bei Druckerhöhung diesen also in der Fig. 1 nach links zu bewegen. Über ein Drehentkopplungslager 66 wird vom Kolben 62 ein Druckring 68 belastet, welcher mit mehreren nicht dargestellten Durchgriffsarmen den zweiten Reibelemententräger 40 dafür vorgesehenen Aussparungen axial durchgreift und auf den radial inneren Bereich des Kraftspeichers 54 einwirken kann. Bei Verlagerung des Kolbens 62 nach links in Fig. 1, also auf die beiden Gruppen 24, 46 von Reibelementen zu, wird der Kraftspeicher 54 radial innen in Richtung auf die Abstützplatte 56 und von der Anpressplatte 52 weg bewegt, so dass die Belastung der Reibelemente 22, 44 gemindert wird und insofern das übertragbare Drehmoment gesenkt wird bzw. die Kopplungsanordnung 10 in einen Ausrückzustand gebracht wird. Wird der Fluiddruck im Zylinder 60 gemindert, so bewegt sich unter der Vorspannwirkung des Kraftspeichers 54 der Druckring 68 in der entgegengesetzten Richtung und verschiebt somit über das Drehentkopplungslager 66 den Kolben 62 in Richtung auf den Bodenbereich des Zylinders 60 zu.

Um eine Kühlung bzw. Schmierung zu erlangen, ist in der Eingangswelle 16 ein Schmierfluidkanal 70 vorgesehen. Dieser ist beispielsweise zu den Lagerbereichen der Eingangswelle 16 am Gehäuse 14 offen und ist axial an einer Stirnfläche der Eingangswelle 16 offen, welcher eine Aussparung 72 im zweiten Reibelemententräger 40 gegenüberliegt. Eine Mehrzahl von dem zweiten Reibelemententräger 40 im axialen Bereich der Außenverzahnung 42 desselben durchsetzende Öffnungen 74 leitet das so zugeführte Schmiermittel nach radial außen direkt in den Bereich der reibend miteinander in Wechselwirkung tretenden Reibelemente 22, 44. Nach dem Umströmen der Reibelemente kann das Schmierfluid dann beispielsweise auch über das Gehäuse 32 und einen Schmierfluidsumpf abgeleitet und wieder rezirkuliert werden.

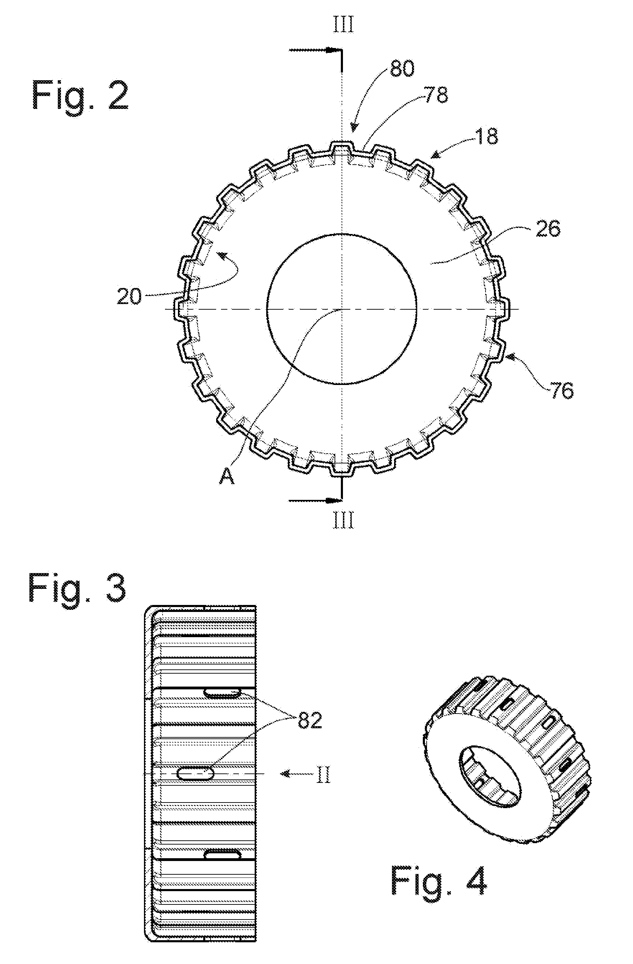

Im Betrieb des Kompressors 12, also dann, wenn über die Übertragungshohlwelle 28 und die Kopplungsanordnung 10 ein Drehmoment auf die Eingangswelle 16 übertragen wird und durch deren Rotation ein Kompressorkolben zur Hin- und Herbewegung in einem Kompressorzylinder 76 angetrieben wird, verdrängt dieser Kolben bei seiner Zurückbewegung Luft aus dem Zylinder 76 nach unten in Richtung auf den die Eingangswelle 16 enthaltenen Bereich des Gehäuses 14. Diese Luft entweicht über die axialen Lagerungsbereiche der Eingangswelle 16 und gelangt auch in den Bereich der Kopplungsanordnung 10. Die Luft strömt dort primär entlang des Außenumfangs des ersten Reibelemententrägers 18 durch den spaltartigen Zwischenraum 38. Um dort den Staudruck so gering als möglich zu halten, ist der erste Reibelemententräger 18, allgemein auch als Außenlamellenträger bezeichnet, so aufgebaut, wie in den Fig. 2 bis 4 gezeigt. Man erkennt grundsätzlich die topfartige Struktur mit dem Bodenbereich 26 und einem die Innenverzahnung 20 bereitstellenden Umfangsbereich 76. Insbesondere erkennt man, dass der Umfangsbereich 76 mit ondulierter Struktur hergestellt ist, was beispielsweise dadurch erlangt werden kann, dass ein ringscheibenartig ausgebildeter Blechrohling durch Einsatz entsprechender Umformungswerkzeuge in die in den Fig. 2 bis 4 gezeigte Form gebracht wird. Durch die ondulierte Struktur des Umfangsbereichs 76 entstehen die Zähne der Innenverzahnung 20. Dort, wo jeweils ein Zahn gebildet ist, ist dann ein in Form einer Einsenkung 78 realisierter Strömungskanal 80 vorhanden. Diese Einsenkung 78 bzw. der Strömungskanal 80 erstreckt sich in der gleichen Richtung, wie der zugeordnete Zahn der Innenverzahnung 20, also im Wesentlichen in axialer Richtung, um eine entsprechende Axialbewegbarkeit der Reibelemente 22 zu gewährleisten.

Durch diese Ausgestaltung des Reibelemententrägers 18 mit einer Vielzahl von nach radial außen und axial offenen Einsenkungen 78, deren Anzahl tatsächlich der Anzahl der Zähne der Verzahnung 20 entspricht, wird, ohne den Außenumfang des Reibelemententrägers 18 vergrößern zu müssen, der Strömungsquerschnitt im spaltartigen Zwischenraum 38 deutlich vergrößert und somit der Luftstau beim Zurückbewegen des Kompressorkolbens wesentlich vermindert.

Um den Austritt von Luft noch weiter zu unterstützen, kann der Reibelemententräger 18 an seinem Außenumfangsbereich, also im Wesentlichen der mit ondulierter Struktur ausgebildeten Außenumfangsfläche, ferner mit einer rippen- bzw. rillenartigen Strukturierung vorgesehen sein, wobei diese Rippen bzw. Rillen sich nicht exakt axial, sondern zur Drehachse A schräg gestellt erstrecken. Es wird somit ein turbinenartiger Fördereffekt generiert, der im Rotationsbetrieb die Bewegung der Luft durch den spaltartigen Zwischenraum 38 weiter unterstützt.

In den Fig. 3 und 4 erkennt man weiter, dass jeweils zwischen zwei Zähnen der Verzahnung 20 Öffnungen 82 gebildet sind. Durch diese Öffnungen 82 kann das von radial innen in den Bereich der Kopplungsanordnung geförderte Schmierfluid hindurchtreten und dann radial außen ebenfalls in den spaltartigen Zwischenraum 38 in Richtung zum Gehäuse 32 entweichen. Es ist selbstverständlich möglich, derartige Öffnungen auch im Bereich der Einsenkungen, also jeweils dort vorzusehen, wo ein Zahn der Innenverzahnung 20 liegt.

Es sei darauf hingewiesen, dass selbstverständlich der Reibelemententräger 18 auch in anderer Art und Weise hergestellt werden kann, beispielsweise als Gussteil. Dabei kann dann vorgesehen sein, dass nicht bei jedem der Zähne der Innenverzahnung 20 ein derartiger Strömungskanal 80 gebildet ist. Auch ist es möglich, die Strömungskanäle 80 nicht notwendigerweise als nach radial außen offene Einsenkungen, sondern als axiale Durchtrittsöffnungen vorzusehen, die beispielsweise durch Bohren eingebracht werden.

## Patentansprüche

1. Kopplungsanordnung zur wahlweisen Drehkopplung einer Eingangswelle (16), insbesondere eines Kompressors (12) in einem Fahrzeug, mit einem Antriebsorgan, insbesondere Antriebsrad, umfassend:
- einen mit dem Antriebsorgan zur gemeinsamen Drehung um eine Drehachse (A) gekoppelten oder zu koppelnden ersten Reibelemententräger (18), mit welchem die Reibelemente (22) einer ersten Gruppe (24) von Reibelementen drehfest gekoppelt sind,
- einen mit der Eingangswelle (16) zur gemeinsamen Drehung um die Drehachse (A) gekoppelten oder zu koppelnden zweiten Reibelemententräger (40), mit welchem die Reibelemente (42) einer zweiten Gruppe (46) von Reibelementen drehfest gekoppelt sind,
wobei der erste Reibelemententräger (18) an seinem Außenumfangsbereich (76) wenigstens einen diesen axial überbrückenden Strömungskanal (80) aufweist.

2. Kopplungsanordnung nach Anspruch 1,
**dadurch gekennzeichnet, dass** wenigstens ein Strömungskanal (80) durch eine nach radial außen offene Einsenkung (78) gebildet ist.

3. Kopplungsanordnung nach Anspruch 1 oder 2,
**dadurch gekennzeichnet, dass** der erste Reibelemententräger (18) mit einer Innenverzahnung (20) zur Drehkopplung mit den Reibelementen (22) der ersten Gruppe (24) von Reibelementen ausgebildet ist und dass im Umfangsbereich von wenigstens einem der Zähne ein Strömungskanal (80) vorgesehen ist.

4. Kopplungsanordnung nach Anspruch 3,
**dadurch gekennzeichnet, dass** bei jedem Zahn ein Strömungskanal (80) vorgesehen ist.

5. Kopplungsanordnung nach Anspruch 4,
**dadurch gekennzeichnet, dass** die Strömungskanäle (80) durch Einsenkungen (78) bereitgestellt sind und dass der erste Reibelemententräger mit ondulierter Struktur zur Bereitstellung der Einsenkungen (78) und der Zähne der Innenverzahnung (20) ausgebildet ist.

6. Kopplungsanordnung nach einem der Ansprüche 1 bis 5,
**dadurch gekennzeichnet, dass** der wenigstens eine Strömungskanal (80) sich axial erstreckt.

7. Kopplungsanordnung nach einem der Ansprüche 1 bis 6,
**dadurch gekennzeichnet, dass** an einer Außenumfangsfläche eine zur Drehachse (A) schräggestellte Rippen- oder/und Rillenstruktur vorgesehen ist.

8. Kopplungsanordnung nach einem der Ansprüche 1 bis 7,
**dadurch gekennzeichnet, dass** zwischen wenigstens zwei Strömungskanälen (80) eine den ersten Reibelemententräger (18) radial durchsetzende Öffnung (82) vorgesehen ist.

9. Kopplungsanordnung nach einem der Ansprüche 1 bis 8,
**dadurch gekennzeichnet, dass** wenigstens ein Strömungskanal (80) durch eine Einsenkung (78) bereitgestellt ist und dass im Bereich des Bodens der Einsenkung (78) eine den ersten Reibelemententräger (18) radial durchsetzende Öffnung vorgesehen ist.

10. Kopplungsanordnung nach einem der Ansprüche 1 bis 9,
**dadurch gekennzeichnet, dass** der Reibelemententräger (18) durch Umformung eines Blechrohlings gebildet ist.

11. Kombination eines Kompressors (12) in einem Fahrzeug mit einer Kopplungsanordnung (10) nach einem der vorhergehenden Ansprüche, wobei der Kompressor (12) ein den ersten Reibelemententräger (18) radial außen wenigstens bereichsweise übergreifendes Gehäuse (14) aufweist.
